# DEMANDE DE BREVET EUROPEEN

(11) **EP 1 418 280 A1**
(43) Date de publication de la demande: **12.05.2004**
(21) Numéro de dépôt: 03292781.6
(22) Date de dépôt: 06.11.2003
(51) Int. Cl.: E02F 9/16, B62D 33/063

(54) **Cabine de conducteur de véhicule de chantier notamment à roues ou à chaînes**

(30) Priorité: 06.11.2002 FR 0213853
(71) Demandeur: Coeuret, Bernard, 14310 Epinay sur Odon (FR)
(72) Inventeur: Coeuret, Bernard, 14310 Epinay sur Odon (FR)
(74) Mandataire: Cabinet HERRBURGER

(57) **Abrégé**

Cabine de conducteur de véhicule de chantier tel que véhicule à chenilles ou à roues, comprenant un cadre inférieur (1), deux montants arrière (2, 3), un pavillon (6) et deux montants avant (4, 5) ainsi qu'une surface de façade (7) et une porte latérale (8).

La largeur de la cabine dépasse celle du fauteuil (13) du conducteur, augmentée de la place nécessaire aux bras, et ses côtés sont plans, au moins sensiblement verticaux, et bordés chacun d'un montant arrière droit (3, 4) et d'un montant avant incurvé (5, 6), rentrant à la base (41) et dans sa partie supérieure (42), et ayant une forme bombée en saillie sensiblement à la hauteur du volant de direction (10).

La porte latérale (8) est inscrite dans le contour latéral des montants avant et arrière (3, 4, 5, 6).

## Description

### Domaine de l'invention

La présente invention concerne une cabine de conducteur de véhicule de chantier notamment à roues ou à chaîne.

### Description de l'art antérieur

Il existe de multiples formes de cabines de véhicules de chantiers ou de véhicules ou équipements assimilés. Pour les petits véhicules, les cabines ou les postes de conduite sont souvent ouverts, protégés par un pavillon porté par quatre colonnes pour assurer la sécurité du conducteur contre les chutes d'objets et le retournement de l'engin.

Il existe également des cabines fermées, en général de forme parallélépipédique, munies de portes et de surfaces vitrées. Mais de façon générale ces cabines connues ont l'inconvénient d'être relativement encombrantes ou lorsqu'elles ne le sont pas, d'accès difficile pour le conducteur.

La présente invention a pour but de remédier à ces inconvénients et se propose de développer une cabine de petit véhicule de chantier ou de travaux publics ou assimilé, ayant un très faible encombrement, offrant une grande visibilité vers l'avant et les côtés, ayant une excellente accessibilité et une bonne tenue aux chocs et aux chutes d'objets.

A cet effet, l'invention concerne une cabine du type défini ci-dessus, caractérisée en ce que
- sa largeur dépasse celle du fauteuil du conducteur, augmentée de la place nécessaire aux bras,
- les côtés sont plans, au moins sensiblement verticaux, et bordés chacun d'un montant arrière droit et d'un montant avant incurvé, rentrant à la base et dans sa partie supérieure, et ayant une forme bombée en saillie sensiblement à la hauteur du volant de direction,
- au moins une porte latérale inscrite dans le contour latéral des montants avant et arrière.

De façon avantageuse, la porte est articulée au montant arrière.

La cabine selon l'invention, ayant juste la largeur nécessaire au conducteur pour effectuer les manoeuvres, cela permet d'avoir un véhicule relativement étroit, présentant du fait de son étroitesse une grande maniabilité ou une très grande diversité d'utilisation dans des chantiers encombrés ou des passages très réduits. Cette cabine de largeur réduite permet également lorsqu'elle équipe un véhicule tel qu'un véhicule à chenille muni d'un mât ou d'une flèche équipé d'un outil tel qu'un godet, une pelle ou une fourche de levage, d'être installé à côté de la cabine grâce aux côtés plans, au moins sensiblement verticaux tout en ayant une largeur globale très réduite. L'installation de la cabine à côté du mât ou de la flèche permet en outre de réduire l'encombrement global de l'engin ou inversement d'en améliorer l'efficacité grâce à l'allongement ainsi rendu possible du mât ou de la flèche.

La forme bombée des montants avant facilite non seulement l'accès à la cabine, quelle que soit la corpulence du conducteur puisque cette porte est la plus large à l'endroit de plus fort encombrement éventuel du conducteur en position d'accès à la cabine ou d'installation dans le siège.

La visibilité vers le haut est améliorée de façon très importante grâce à l'extrémité supérieure de chaque montant latéral qui est plus proche de l'axe du montant arrière que son extrémité inférieure. Cela permet d'avoir pour la façade de la cabine, dans sa partie vitrée, un très fort dégagement et une excellente visibilité vers le haut, ce qui est indispensable pour certains équipements, en particulier des engins de levage ou travaillant avec un outil en hauteur. L'angle mort vers le haut est réduit considérablement puisque sur les côtés, la surface bombée étant cintrée à la fois en section verticale et en section horizontale, la visibilité latérale en partie haute est excellente.

Ainsi, la façade avant, entre les montants avant, est fermée par une surface bombée dont la section dans le plan vertical correspond sensiblement à celle du montant avant et la section horizontale est bombée au milieu pour recevoir le tableau de bord et les organes de commande.

De façon avantageuse, la cabine comporte un caisson formant le siège recevant une assise rembourrée et un dossier, ce caisson logeant le moteur.

Suivant une autre caractéristique, une cabine de conducteur équipant un véhicule à roues est selon l'invention installée en position médiane au-dessus des roues avant et elle comporte de chaque côté, bordant le caisson recevant le moteur, un réservoir, chaque réservoir chevauchant une roue et formant au moins en partie un garde-boue.

Le réservoir ainsi situé latéralement du côté arrière de la cabine peut se prolonger à l'avant par un garde-boue formant marchepied et se terminant à l'avant également par un marchepied pour accéder à la surface transparente de la façade et pouvoir la nettoyer à la main.

### Dessins

La présente invention sera décrite ci-après de manière plus détaillée à l'aide de modes de réalisation représentés schématiquement dans les dessins annexés dans lesquels :
- la figure 1 est une vue de côté coupée d'une cabine selon l'invention,
- la figure 2 est une vue de face de la cabine de la figure 1,
- la figure 3 est une vue de côté non coupée de la cabine de la figure 1 pour un véhicule à roues,
- la figure 4 est une vue de dessus de la cabine de la figure 1,
- la figure 5A est une vue en perspective de la cabine de la figure 3,
- la figure 5B est une vue en perspective d'une variante de cabine,
- la figure 6 est une vue de face coupée d'un engin à chenille équipé d'une cabine selon l'invention,
- la figure 7 est une vue de côté de l'engin selon la figure 6,
- la figure 8 est une vue de face de l'engin de la figure 6.

### Description de différents modes de réalisation

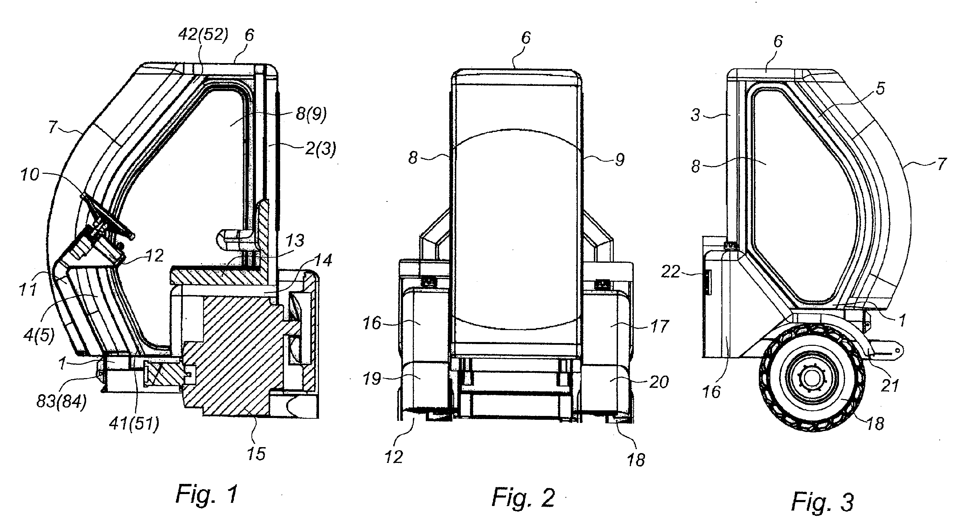

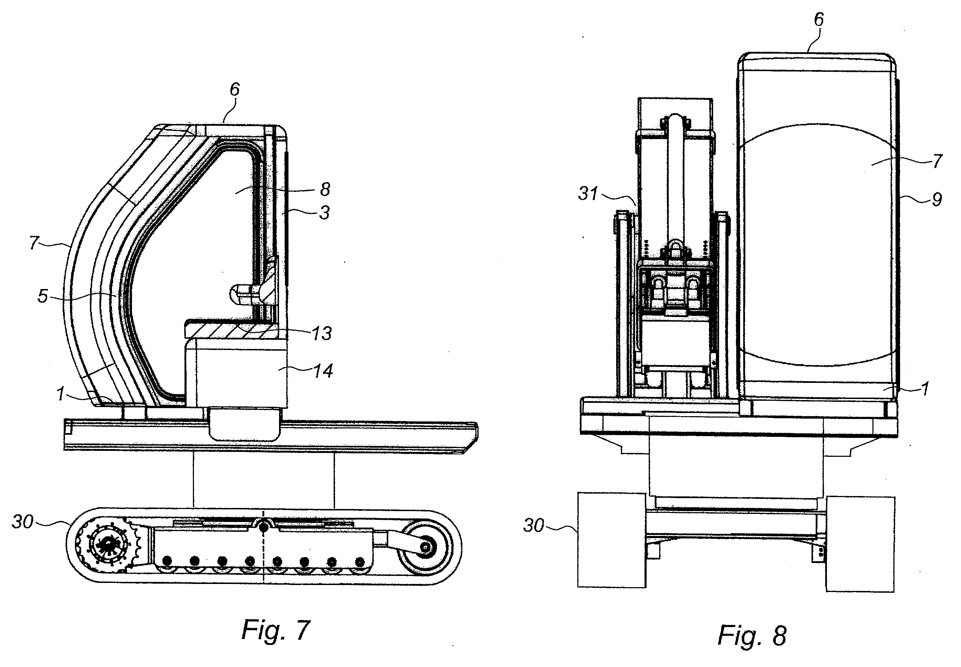

Selon les figures 1, 2, 3, l'invention concerne une cabine de conducteur de véhicule de chantier ou véhicule de ce type. Ce véhicule peut être un véhicule à roues comme celui représenté partiellement à la figure 3 ou un véhicule à chenilles comme celui de la figure 6.

Cette cabine se compose d'un cadre inférieur 1, de deux montants arrière 2, 3, de deux montants avant 4, 5, ainsi que d'un pavillon 6 constituant le dessus de la cabine, d'une surface de façade 7 et d'une ou deux portes latérales 8, 9.

Les côtés de la cabine sont plans et sensiblement verticaux. Les montants arrière 2, 3, sont droits et verticaux alors que les montants avant 4, 5, sont incurvés. Ils sont rentrants à la base 41, 51 et à la partie supérieure 42, 52 et leur forme bombée atteint sa forme en saillie maximale au niveau du volant 10, de la colonne 11 portant le volant et le tableau de commande 12. Cette disposition avancée des organes de direction et de commande facilite l'accès au poste de conduite. La ou les portes latérales 8, 9, sont inscrites dans le contour défini par le montant arrière 2, (3), le montant avant 4, (5), la partie inférieure de la cabine au niveau du cadre 1 et le pavillon 6. La porte 8 est articulée au niveau du montant arrière 3.

L'extrémité supérieure 42, 52 des montants avant 4, 5, est très en retrait par rapport à l'extrémité inférieure 41, 51 de ces mêmes montants, de manière à dégager la vue vers le haut.

La façade 7 est constituée par une surface bombée, de préférence totalement transparente, inscrite entre les montants avant 4, 5, le cadre inférieur 1 et le bord avant du pavillon 6. Cette façade avant 7 est ainsi bombée non seulement en section verticale, en suivant la courbure des montants avant 4, 5, mais également en section horizontale, la partie la plus en saillie se trouvant au niveau du volant 10, de la colonne 11 et du poste de conduite 12. Le volant 10 est installé de préférence au milieu de la cabine et celle-ci a une largeur (figures 2, 6) dépassant juste celle du fauteuil 13 augmentée de la largeur des bras du conducteur.

Le fauteuil 13 est installé sur un caisson 14 logeant de préférence le moteur 15. Celui-ci et les organes périphériques ne faisant pas partie de l'invention ne seront pas décrits.

De part et d'autre, la cabine est bordée par un réservoir 16, 17, chevauchant en partie les roues 18 dans le cas d'un véhicule à roues ; la cabine est alors installée sensiblement à la verticale des roues avant. Le réservoirs 16, 17 se poursuivent par un garde-boue 19, 20 formant également marchepied et se prolongeant vers l'avant par un autre marchepied 21, 22 permettant d'accéder à la surface avant 7, par exemple pour la nettoyer.

Les réservoirs 16, 17 sont équipés d'une jauge 22 ; l'un des réservoirs est le réservoir de carburant et l'autre, celui de liquide hydraulique.

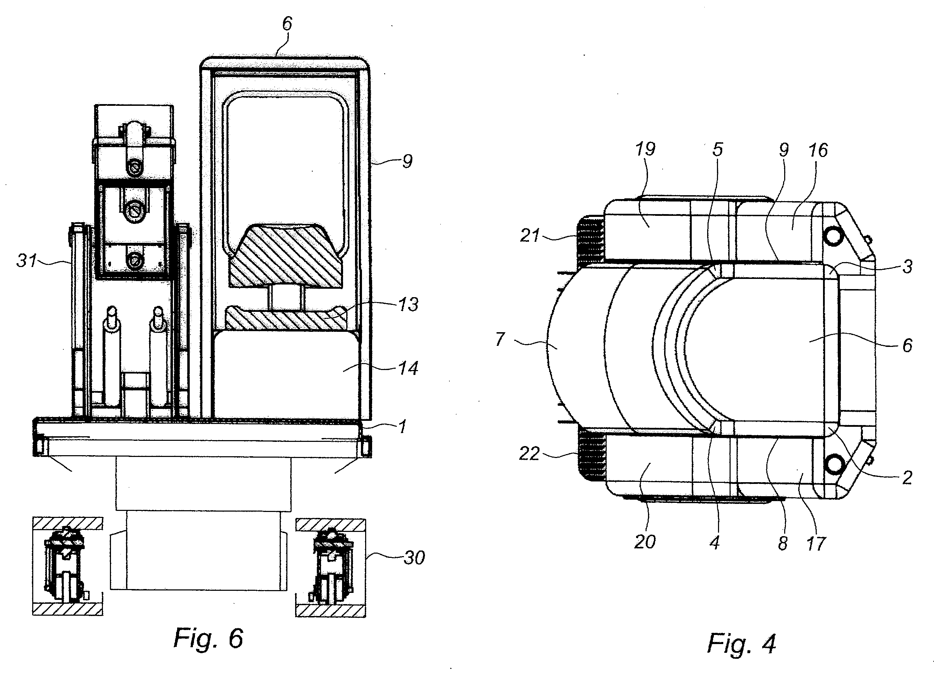

La figure 4 est une vue de dessus montrant plus particulièrement la forme bombée de la façade avant de la cabine et les différents accessoires latéraux tels que les garde-boue, marchepied et réservoir.

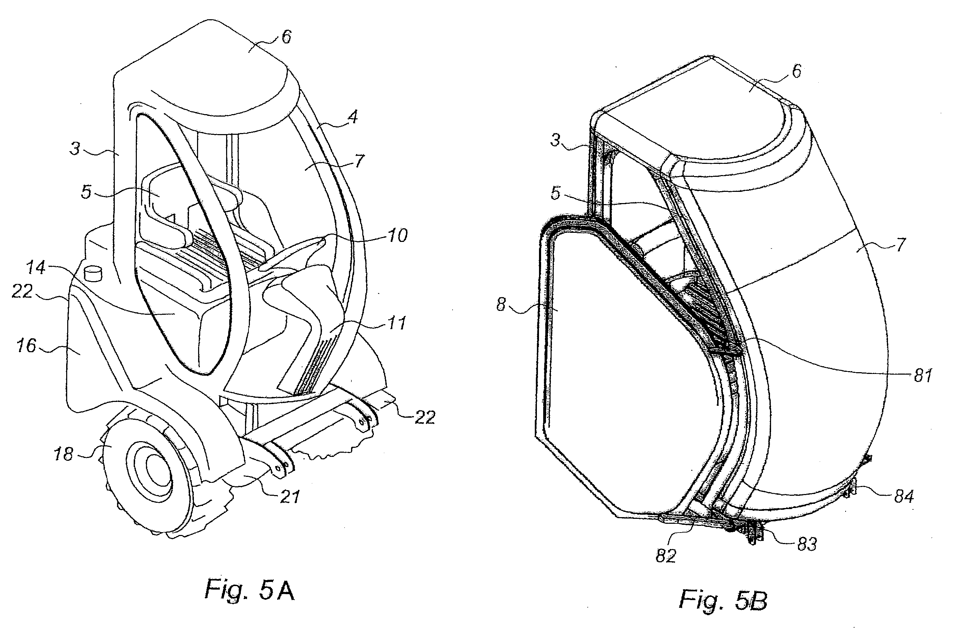

La figure 5A montre la cabine des figures 1 à 4, en perspective, mettant en évidence la forme des différentes parties, notamment celle du pavillon 6.

La figure 5B montre une variante de réalisation de la cabine qui se distingue par l'articulation de la porte 8 au niveau du montant avant 5 par l'intermédiaire de deux charnières 81, 82. L'ensemble de la cabine, y compris le caisson 14 couvrant le moteur 15 est, de préférence, articulé au châssis par le cadre inférieur 1 à l'aide de charnières 83, 84. Ces charnières permettent de basculer la cabine vers l'avant et de dégager l'accès au moteur. Cette articulation n'est pas liée à l'articulation des portes 8, 9 à l'avant ou à l'arrière de la cabine. Cette articulation est, de préférence, également prévue dans le mode de réalisation des figures 1 à 4.

Les figures 6, 7, 8, montrent une cabine telle que décrite ci-dessus équipant un véhicule à chenilles 30. Dans ce cas, les réservoirs sont déplacés pour permettre de décaler la cabine d'un côté et installer directement à côté de la cabine, un équipement tel qu'un mât à une flèche 31. Dans ce cas, il n'y a qu'une porte 9, l'autre 8 étant condamnée ou fixe.

## Revendications

1. Cabine de conducteur de véhicule de chantier tel que véhicule à chenilles ou à roues, comprenant un cadre inférieur, deux montants arrière, un pavillon et deux montants avant ainsi qu'une surface de façade et au moins une porte latérale, les côtés étant plans,
cabine **caractérisée en ce que**
- sa largeur dépasse juste celle du fauteuil (13) du conducteur, augmentée de la place nécessaire aux bras,
- les côtés plans sont, au moins sensiblement verticaux, et bordés chacun d'un montant arrière droit (3, 4) et d'un montant avant incurvé (5, 6), rentrant à la base (41) et dans sa partie supérieure (42), et ayant une forme bombée en saillie sensiblement à la hauteur du volant de direction (10),
- au moins une porte latérale (8, 9) inscrite dans le contour latéral des montants avant et arrière (3, 4, 5, 6),
- la façade avant (7), entre les montants avant (4, 5), est fermée par une surface bombée dont la section dans le plan vertical correspond sensiblement à celle des montants avant (4, 5) et la section horizontale est bombée, et la partie la plus en saillie se trouvant au milieu pour recevoir le tableau de bord et les organes de commande (10, 11, 12).

2. Cabine de conducteur selon la revendication 1,
**caractérisée en ce que**
la porte (8, 9) est articulée au montant arrière (5, 6).

3. Cabine de conducteur selon la revendication 1,
**caractérisée en ce que**
l'extrémité supérieure (42) du montant avant (4, 5) est plus proche du montant arrière (3, 4) que son extrémité inférieure (41).

4. Cabine de conducteur selon la revendication 1,
**caractérisée en ce qu'**
elle comporte un caisson (14) formant le siège (13) logeant le moteur (15) du véhicule.

5. Cabine de conducteur selon les revendications 1 à 4 pour un véhicule de chantier équipant un véhicule à roues,
**caractérisée en ce que**
la cabine est installée dans une position médiane sensiblement au-dessus des roues avant (18) et elle comporte de chaque côté un réservoir (19, 20) chevauchant une roue en formant au moins en partie un garde-boue.

6. Cabine de conducteur selon la revendication 4,
**caractérisée en ce que**
la surface bombée formant la façade (7) est transparente et s'étend du plancher (1) de la cabine jusqu'au pavillon (6).
